# EUROPEAN PATENT SPECIFICATION

(11) **EP 0 842 698 B1**
(45) Date of publication and mention of the grant of the patent: **21.05.2003**
(21) Application number: 98103008.3
(22) Date of filing: 16.04.1996
(51) Int. Cl.: B01J 21/08, B01J 32/00

(54) **Silica for use as a metal catalyst support**
Kieselsäure zur Verwendung als Metallkatalysatorträger
Silice utilisable comme support de catalyseurs métalliques

(30) Priority: 04.05.1995 US 434636
(43) Date of publication of application: 20.05.1998
(62) Divisional of application: 96912797.6
(73) Proprietor: Dow Global Technologies Inc., Midland, Michigan 48674 (US)
(72) Inventor: Hucul, Dennis A., Midland, Michigan 48642 (US); Hahn, Stephan F., Sanford, Michigan 48657 (US)
(74) Representative: Burford, Anthony Frederick

(56) References cited:
- EP-A- 0 378 104
- EP-A- 0 550 270
- DE-A- 3 227 650
- US-A- 3 888 972
- US-A- 4 112 032
- US-A- 4 617 060
- US-A- 4 976 848

## Description

The present invention is directed to a silica for use as a metal catalyst support.

Aromatic polymers have been previously hydrogenated using a variety of catalysts and conditions. Historically, typical hydrogenation catalysts have low reactivity, require high catalyst to polymer ratios and hydrogenate low molecular weight (less than 20,000) aromatic polymers. Hydrogenation of high molecular weight (Mw) aromatic polymers have also required high temperature and/or pressure conditions in order to achieve high hydrogenation levels. However, these conditions may cause polymer degradation.

JP-A-03076706 describes a process for hydrogenating an aromatic polymer using a silica supported metal hydrogenation catalyst. These catalysts use a silica support of small pore diameter (200 to 500 angstroms; 20-50 nm), high surface area (100-500 m²/g) and achieve hydrogenation levels of greater than 70 percent. However, to achieve high hydrogenation levels, large amounts of catalyst (1-100 weight percent based on resin) and high temperatures (170°C) are required which cause polymer degradation as exemplified by the decrease in the Mw after hydrogenation.

US-A-5,028,665 describes a process for hydrogenating an unsaturated polymer using a supported metal hydrogenation catalyst wherein the support contains a majority of pores having diameters greater than 450 angstroms (45 nm). However, the catalyst is limited by a small surface area and enables 90 to 100 percent olefinic hydrogenation but less than 25 percent aromatic hydrogenation.

US-A-5,352,744 issued to Bates et al. describes a process for hydrogenating poly(alkenyl aromatic) or poly(alkenyl aromatic)/polydiene block copolymers, that provides hydrogenated polymers with 99.5 percent or greater saturation, using a metal catalyst on an alkaline metal salt support. Although Bates teaches from 0.01 to 10 grams of catalyst per gram of polymer may be used, a ratio of greater than 1.0 gram of catalyst per gram of polymer is needed to reach high hydrogenation levels.

Silica has long been used as a support for metal catalysts. Typically, the silica used as a support has had high surface area (200-600 m²/g) and small average pore diameter (20 to 40 angstroms; 2-4 nm). Very low hydrogenation levels are obtained when hydrogenating high molecular weight aromatic polymers using metal hydrogenation catalysts supported by this type of silica.

DE-A-3237650 (corresponding to US-A-4452951) discloses a process for hydrogenating an acrylonitrile/butadiene copolymer using a hydrogenation catalyst supported on a porous silica having an average pore diameter of 80 to 1,200 angstroms (8-120 nm) and a specific surface area of not more than 600 m²/g. There is no disclosure of pore size distribution and the silica used was commercially available.

US-A-4617060 discloses a calcined catalyst support having a surface area of 30 to 125 m²/g, an average pore diameter of 100 to 500 angstroms (10-50 nm) and a bulk density of 0.3 to 0.6 g/cm³ prepared by calcining an amorphous silica powder having an average particle size in range 100 to 500 angstroms (10 to 50 nm). There is no reference to the preparation of the amorphous silica powder and no reference to pore distribution.

US-A-4112032 discloses the preparation of porous silica-containing materials by gelation of a mixture of aqueous alkali metal silicate and colloidal silica solution followed by leaching and, optionally, calcining. The resultant material has a pore diameter between 100 and 1,000 angstroms (10-100 nm) with at least 80% within ± 30% of the average pore diameter. Although several exemplified silicas have pore diameters averaging at least 600 angstroms (60 nm), there is no disclosure of a pore size distribution in which the pore volume for pores less than 600 angstroms (60 nm) is less than 2 percent of the total pore volume.

The present invention provides a silica having a surface area of at least 10 m²/g and a narrow pore size distribution such that at least 98 percent of the pore volume as measured by mercury porosimetry is defined by pores having diameter of greater than 600 angstroms (60 nm) and pore volume measured by nitrogen desorption for pores less than 600 angstroms (60 nm) is less than 2 percent of the total pore volume measured by mercury porosimetry.

As described in Parent EP-A-0823916 (WO 96/34896), the silica of the invention is used as a support for a metal catalyst, especially a metal hydrogenation catalyst. Because of the high efficiency of the catalysts, they can be used in hydrogenating polystyrene to produce polyvinylcyclohexane without the disadvantages of the prior art.

The silica of the present invention has a narrow pore size distribution and surface area greater than 10 meters squared per gram (m²/g).

The pore size distribution, pore volume, and average pore diameter can be obtained via mercury porosimetry following the proceedings of ASTM D-4284-83.

The pore size distribution is typically measured using mercury porosimetry. However, this method is only sufficient for measuring pores of greater than 60 angstroms (6 nm). Therefore, an additional method must be used to measure pores less than 60 angstroms (6 nm). One such method is nitrogen desorption according to ASTM D-4641-87 for pore diameters of less than 600 angstroms (60 nm). Therefore, narrow pore size distribution is defined as the requirement that at least 98 percent of the pore volume is defined by pores having pore diameters greater than 600 angstroms (60 nm) and that the pore volume measured by nitrogen desorption for pores less than 600 angstroms (60 nm), be less than 2 percent of the total pore volume measured by mercury porosimetry.

The surface area can be measured according to ASTM D-3663-84. The surface area is typically between 10 and 50 m²/g, preferably between 12 and 20 with most preferred between 14 and 17 m²/g.

Average pore diameters are typically between 1000 and 5000 angstroms (100 and 500 nm), preferably between 3000 and 4000 angstroms (300 and 400 nm), most preferably between 3500 and 4000 angstroms (350 and 400 nm). Pore diameters of greater than 5000 angstroms (500 nm) may also be used if the surface area is maintained at the levels specified.

The silica of the present invention can be made by combining potassium silicate in water with a gelation agent, such as formamide, polymerizing and leaching as exemplified in US-A-4,112,032. The silica is then hydrothermally calcined as in Iler, R.K., *The Chemistry of Silica,* John Wiley and Sons, 1979, pp. 539-544, which generally consists of heating the silica while passing a gas saturated with water over the silica for 2 hours or more at temperatures from 600°C to 850°C. Hydrothermal calcining results in a narrowing of the pore diameter distribution as well as increasing the average pore diameter.

The following Example is set forth to illustrate the present invention and should not be construed to limit its scope. In the Example, all parts and percentages are by weight unless otherwise indicated.

### Example

150 g of potassium silicate (Kasil #1, a product of PQ Corp.) and 10 g of water is charged to a 250 milliliter (ml) beaker and stirred while 15 grams(g) of formamide is added slowly such that no precipitation occurs. The mixture is continuously stirred for 5 minutes until a clear homogeneous solution is obtained. The mixture is then placed in an 80°C oven for 5 hours and the silica polymerized. The silica is removed, broken into pieces of less than 8 mesh (2.4 mm), and washed with 500 ml of 1 M acetic acid, 500 ml of 1 M ammonium acetate and finally with 500 ml of 80°C 1 M ammonium acetate. The washed silica is placed in a 1.0 inch (2.5 cm) O.D. quartz tube and a flow of air at room temperature is started over the silica. The silica then undergoes a hydrothermal calcination. The following procedure is used, the silica is heated from 25°C to 850°C at a rate of 3.5°C/min. Upon reaching 150°C, the air is passed through a bubbler to saturate with water while the heating continues. At 850°C the calcination is continued isothermally for 2 hours. The silica is then cooled to 350°C with water saturated air. Upon reaching 350°C the saturator is removed and the silica is cooled with dry flowing air to 80°C and removed from the quartz tube. The data below shows the pore size distribution via mercury porosimetry.

| | |
|---|---|
| Pore Volume | 1.37 cm³/g |
| Total Pore Area | 14.2 m²/g |
| Median Pore Diameter (Volume) | 3845 angstroms (384.5 nm) |
| Median Pore Diameter (area) | 3672 angstroms (367.2 nm) |
| Average Pore Diameter (4V/A) | 3817 angstroms (381.7 nm) |

Three additional batches are prepared using the same procedure described above and are shown in Table I. The surface area of Table I is measured according to ASTM method D-3663-84.

**TABLE I**

| Sample | Pore Volume (cm³/g) | Average Pore Diameter (4V/A) angstroms (nm) | Surface Area (m²/g) |
|---|---|---|---|
| 1 | 1.4 | 3800 (380) | 14 |
| 2 | 1.6 | 3600 (360) | 17 |
| 3 | 1.5 | 3900 (390) | 15 |

However, mercury porosimetry should not be relied on alone to check pore size distributions because it is not sensitive to pores of less than 60 angstroms (6 nm). Nitrogen desorption techniques measures pores of less than 600 angstroms (60 nm). Using this technique, the silica as prepared in Sample 1 above has a cumulative pore volume in pores of less than 100 angstroms (10 nm) of 0.006 cm³/g, a cumulative pore volume in pores of less than 320 angstroms (32 nm) of 0.013 cm³/g and a cumulative pore volume in pores of less than 600 angstroms (60 nm) of 0.016 cm³/g. Therefore, the cumulative pore volume for pores less than 600 angstroms (60 nm) is 1.1 percent of the cumulative pore volume for pores greater than 60 angstroms (6 nm).

## Claims

1. A silica having a surface area of at least 10 m²/g and a narrow pore size distribution such that at least 98 percent of the pore volume as measured by mercury porosimetry is defined by pores having diameter of greater than 60 nm (600 angstroms) and pore volume measured by nitrogen desorption for pores less than 60 nm (600 angstroms) is less than 2 percent of the total pore volume measured by mercury porosimetry.

2. A silica of Claim 1, wherein the pores have an average diameter of from 100 to 500 nm (1000 to 5000 angstroms).

3. A silica of Claim 2, wherein the pores have an average diameter of from 300 to 500 nm (3000 to 5000 angstroms).

4. A silica of Claim 3, wherein the pores have an average diameter of 300 to 400 nm (3000 to 4000 angstroms).

5. A silica of Claim 4, wherein the pores have an average diameter of 350 to 400 nm (3500 to 4000 angstroms).

6. A silica of any one of the preceding claims, wherein the surface area is from 10 m²/g to 50 m²/g.

7. A silica of any one of the preceding claims, wherein the surface area is from 12 m²/g to 20 m²/g.

8. A silica of any one of the preceding claims, wherein the surface area is from 14 m²/g to 17 m²/g.

9. A method of producing a silica of Claim 1 comprising combining potassium silicate in water with a gelation agent, polymerizing and leaching, and hydrothermally calcining the resultant silica.

10. A method of Claim 9, wherein the gelation agent is formamide.

11. A method of Claim 9 or Claim 10, wherein the hydrothermal calcination consists of heating the silica while passing a gas saturated with water over the silica for 2 hours or more at temperatures from 600°C to 850°C.

## Patentansprüche

1. Siliciumdioxid mit einer Oberfläche von mindestens 10 m²/g und einer schmalen Porengrößenverteilung, so dass mindestens 98% des Porenvolumens, wie mittels Quecksilberporosimetrie gemessen, durch Poren mit einem Durchmesser von größer als 60 nm (600 Angstrom) definiert werden und das Porenvolumen, das mittels Stickstoffdesorption gemessen wird, für Poren mit weniger als 60nm (600 Angstrom) weniger als 2% des Gesamtporenvolumens, das mittels Quecksilberporosimetrie gemessen wird, beträgt.

2. Siliciumdioxid nach Anspruch 1, wobei die Poren einen mittleren Durchmesser von 100-500 nm (1000-5000 Angstrom) aufweisen.

3. Siliciumdioxid nach Anspruch 2, wobei die Poren einen mittleren Durchmesser von 300-500 nm (3000-5000 Angstrom) aufweisen.

4. Siliciumdioxid nach Anspruch 3, wobei die Poren einen mittleren Durchmesser von 300-400 nm (3000-4000 Angstrom) aufweisen.

5. Siliciumdioxid nach Anspruch 4, wobei die Poren einen mittleren Durchmesser von 350-400 nm (3500-4000 Angstrom) aufweisen.

6. Siliciumdioxid nach einem der vorstehenden Ansprüche, wobei die Oberfläche 10 m²/g bis 50 m²/g beträgt.

7. Siliciumdioxid nach einem der vorstehenden Ansprüche, wobei die Oberfläche 12 m²/g bis 20 m²/g beträgt.

8. Siliciumdioxid nach einem der vorstehenden Ansprüche, wobei die Oberfläche 14 m²/g bis 17 m²/g beträgt.

9. Verfahren zur Herstellung eines Siliciumdioxids nach Anspruch 1, das Vereinigen von Kaliumsilicat in Wasser mit einem Geliermittel, Polymerisieren und Auswaschen und hydrothermisches Calcinieren des resultierenden Siliciumdioxids umfasst.

10. Verfahren nach Anspruch 9, wobei das Geliermittel Formamid ist.

11. Verfahren nach Anspruch 9 oder 10, wobei die hydrothermische Calcinierung aus Erhitzen des Siliciumdioxids für 2 Stunden oder länger bei Temperaturen von 600°C bis 850°C, während ein mit Wasser gesättigtes Gas über das Siliciumdioxid geführt wird, besteht.

## Revendications

1. Silice présentant une surface d'au moins 10 m²/g et une distribution étroite des dimensions des pores, telle qu'au moins 98 pour cent du volume des pores, mesuré par porosimétrie au mercure, sont représentés par des pores de diamètre supérieur à 60 nm (600 angströms), et que le volume de pores, mesuré par désorption d'azote, pour les pores de moins de 60 nm (600 angströms) est inférieur à 2 pour cent du volume total des pores mesuré par porosimétrie au mercure.

2. Silice selon la revendication 1, dans laquelle les pores ont un diamètre moyen de 100 à 500 nm (de 1000 à 5000 angströms).

3. Silice selon la revendication 2, dans laquelle les pores ont un diamètre moyen de 300 à 500 nm (de 3000 à 5000 angströms).

4. Silice selon la revendication 3, dans laquelle les pores ont un diamètre moyen de 300 à 400 nm (de 3000 à 4000 angströms).

5. Silice selon la revendication 4, dans laquelle les pores ont un diamètre moyen de 350 à 400 nm (de 3500 à 4000 angströms).

6. Silice selon l'une des revendications précédentes, dans laquelle la surface est de 10 m²/g à 50 m²/g.

7. Silice selon l'une des revendications précédentes, dans laquelle la surface est de 12 m²/g à 20 m²/g.

8. Silice selon l'une des revendications précédentes, dans laquelle la surface est de 14 m²/g à 17 m²/g.

9. Procédé de production d'une silice selon la revendication 1, comprenant la combinaison de silicate de potassium dans l'eau avec un agent de gélification, la polymérisation et la lixiviation, et la calcination hydrothermique de la silice résultante.

10. Procédé selon la revendication 9, dans lequel l'agent de gélification utilisé est le formamide.

11. Procédé selon la revendication 9 ou la revendication 10, dans lequel la calcination hydrothermique consiste à chauffer la silice tout en faisant passer un gaz saturé avec de l'eau sur la silice pendant 2 heures ou davantage à des températures de 600°C à 850°C.
